# EUROPEAN PATENT APPLICATION

(11) **EP 2 942 704 A1**
(43) Date of publication of application: **11.11.2015**
(21) Application number: 15166377.0
(22) Date of filing: 05.05.2015
(51) Int. Cl.: G06F 3/0488

(54) **HANDHELD DEVICE AND INPUT METHOD THEREOF**

(30) Priority: 05.05.2014 TW 103115920
(71) Applicant: Jiyonson Co., Ltd., 231 New Taipei City (TW)
(72) Inventor: Tun, Yun-Long, 231 New Taipei City (TW)
(74) Representative: Michalski Hüttermann & Partner Patentanwälte mbB

(57) **Abstract**

A handheld device and an input method for the handheld device are provided. The handheld device includes a touch screen and a processor. The touch screen senses a touch to generate a touch signal and displays a user interface with an input zone which defines input scrolling bars and at least one switch scrolling bar. Each input scrolling bar has a primary character-symbol and at least one secondary character-symbol. The processor determines that the touch signal corresponds to a target input scrolling bar of the input scrolling to temporarily change the primary character-symbol and the at least one secondary character-symbol of the target input scrolling bar and generates an input signal, or that the touch signal corresponds to the at least one switch scrolling bar to simultaneously change the primary character-symbols and the at least one secondary character-symbol of the input scrolling bars.

## Description

### BACKGROUND OF THE INVENTION

### Field of the Invention

The present invention relates to a handheld device and an input method thereof. More particularly, the handheld device of the present invention displays a virtual keyboard, which allows to change character-symbols presented by the input keys through the use of scrolling bars and to input characters or character-symbols.

### Descriptions of the Related Art

With rapid advancement of the science and technologies as well as the Internet, demands for information exchanges, communications, and entertainments also increase significantly. To satisfy these demands, various kinds of handheld devices have been produced in large batches for use by consumers. The commonly used handheld devices include smartphones, digital personal assistants (PDAs), tablet computers, personal computers (PC), laptop PC, multimedia playing devices, satellite positioning & navigation devices and so on.

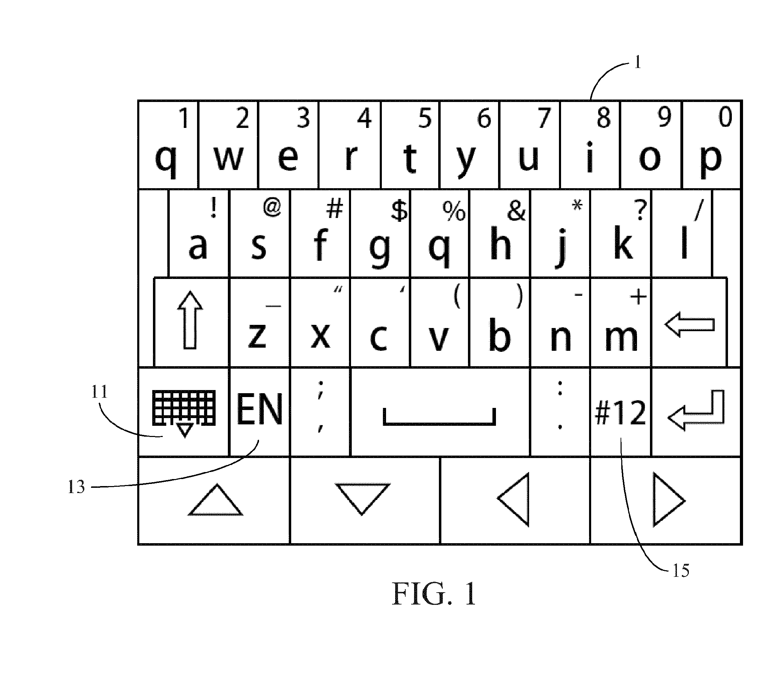

Take the smartphones as an example for description. Most of the smartphones currently available on the market are provided with a touch screen so that users can operate the smartphones by touching the touch screen. As shown in **FIG. 1****,** when a user desires to perform text communications or edit a file, a virtual keyboard 1 in a user interface will be activated by the smartphone to display various characters and symbols for clicking and inputting by the user. However, the conventional virtual keyboard **1** can only display one of a language character-symbol, a digital symbol, a punctuation symbol and a facial expression symbol at a time. Therefore, a user who needs to input a Chinese letter, an English letter, a number and a facial symbol continuously must click the switch buttons **11, 13** or **15** from time to time to change presentations of the whole virtual keyboard. This represents inconveniences to the user in the inputting process. For example, actually this situation tends to occur especially for Asian users. As an example, when a user desires to input a Chinese (or Japanese or Korean) letter, an English letter and a number respectively, he or she must click the switch buttons **11, 13** or **15** from time to time in order to accomplish the input of the Chinese (or Japanese or Korean) letter, the English letter and the number respectively.

Accordingly, an urgent need exists in the art to provide a convenient character and symbol input mechanism that allows the user to switch between characters or/and symbols and to input characters and symbols more directly, simply and rapidly.

### SUMMARY OF THE INVENTION

An objective of the present invention is to provide a handheld device and an input method thereof. The handheld device displays a virtual keyboard, which presents a plurality of input scrolling bars and at least one switch scrolling bars in the form of scrolling bars. By means of the at least one switch scrolling bar, the user can simultaneously change characters or symbols presented by all the input scrolling bars. Besides, the user may further click and slide a single input scrolling bar to only temporarily change the character or symbol presented by the single input scrolling bar and to input the character or symbol. Thereby, the handheld device and the input method thereof according to the present invention allow the user to switch between characters or/and symbols and to input characters and symbols more directly, simply and rapidly.

To achieve the aforesaid objective, the present invention discloses a handheld device. The handheld device comprises a touch screen and a processor. The touch screen is configured to sense a touch to generate a touch signal, and display a user interface. The user interface comprises an input zone. The input zone defines a plurality of input scrolling bars and at least one switch scrolling bar. Each of the input scrolling bars has a primary character-symbol and at least one secondary character-symbol. The processor, which is electrically connected to the touch screen, is configured to determine that the touch is a sliding action and the touch signal corresponds to a target input scrolling bar among the input scrolling bars or to the at least one switch scrolling bar of the input zone. When the touch signal corresponds to the target input scrolling bar among the input scrolling bars of the input zone, the processor changes the primary character-symbol of the target input scrolling bar into another primary character-symbol and changes the at least one secondary character-symbol of the target input scrolling bar into another at least one secondary character-symbol according to a first sliding direction corresponding to the sliding action so as to generate an input signal corresponding to the another primary character-symbol. The processor is further configured to change the another primary character-symbol presented by the target input scrolling bar back into the primary character-symbol after the input signal is generated, where the another primary character-symbol corresponds to one of the at least one secondary character-symbol, and one of the another at least one secondary character-symbol corresponds to the primary character-symbol. When the touch signal corresponds to the at least one switch scrolling bar of the input zone, the processor simultaneously changes the primary character-symbol and the at least one secondary character-symbol of each of the input scrolling bars according to a second sliding direction corresponding to the sliding action.

Additionally, the present invention further discloses an input method for use in a handheld device. The handheld device comprises a touch screen and a processor. The touch screen senses a touch to generate a touch signal, and displays a user interface. The user interface comprises an input zone. The input zone defines a plurality of input scrolling bars and at least one switch scrolling bar. Each of the input scrolling bars has a primary character-symbol and at least one secondary character-symbol. The input method is executed by the processor and comprises the following steps of: (a) determining that the touch is a sliding action and the touch signal corresponds to a target input scrolling bar among the input scrolling bars or to the at least one switch scrolling bar of the input zone; (b) when the touch signal corresponds to the target input scrolling bar among the input scrolling bars of the input zone, changing the primary character-symbol of the target input scrolling bar into another primary character-symbol and changing the at least one secondary character-symbol of the target input scrolling bar into another at least one secondary character-symbol according to a first sliding direction corresponding to the sliding action so as to generate an input signal corresponding to the another primary character-symbol, and changing the another primary character-symbol presented by the target input scrolling bar back into the primary character-symbol after the input signal is generated, wherein the another primary character-symbol corresponds to one of the at least one secondary character-symbol, and one of the another at least one secondary character-symbol corresponds to the primary character-symbol; and (c) when the touch signal corresponds to the at least one switch scrolling bar of the input zone, simultaneously changing the primary character-symbol and the at least one secondary character-symbol of each of the input scrolling bars according to a second sliding direction corresponding to the sliding action.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1** is a schematic view of a virtual keyboard **1** in the prior art;
**FIG. 2** is a schematic view of a handheld device **2** according to a first embodiment and a second embodiment of the present invention;
**FIG. 3** is a schematic view of an input zone **41** in the first embodiment and the second embodiment of the present invention;
**FIGs. 4A****∼4B** depict an implementation in which the input zone **41** is used by a user;
**FIGs. 5A****∼5B** depict other implementations of the input zone **41** according to the present invention;
**FIGs. 6A****∼6C** depict other implementations in which the input zone **41** is used by a user;
**FIGs. 7A****∼7B** depict other implementations in which the handheld device **2** is used by a user; and
**FIG. 8** is a flowchart diagram of an input method according to a third embodiment of the present invention.

### DESCRIPTION OF THE PREFERRED EMBODIMENT

In the following description, the present invention which relates to a handheld device and an input method thereof will be explained with reference to embodiments thereof. However, these embodiments are not intended to limit the present invention to any specific environment, applications or particular implementations described in these embodiments. Therefore, description of these embodiments is only for purpose of illustration rather than to limit the present invention, and the scope of the present invention is governed by the claims. Besides, in the following embodiments and the attached drawings, elements unrelated to the present invention are omitted from depiction; and dimensional relationships among individual elements in the attached drawings are illustrated only for ease of understanding, but not to limit the actual scale.

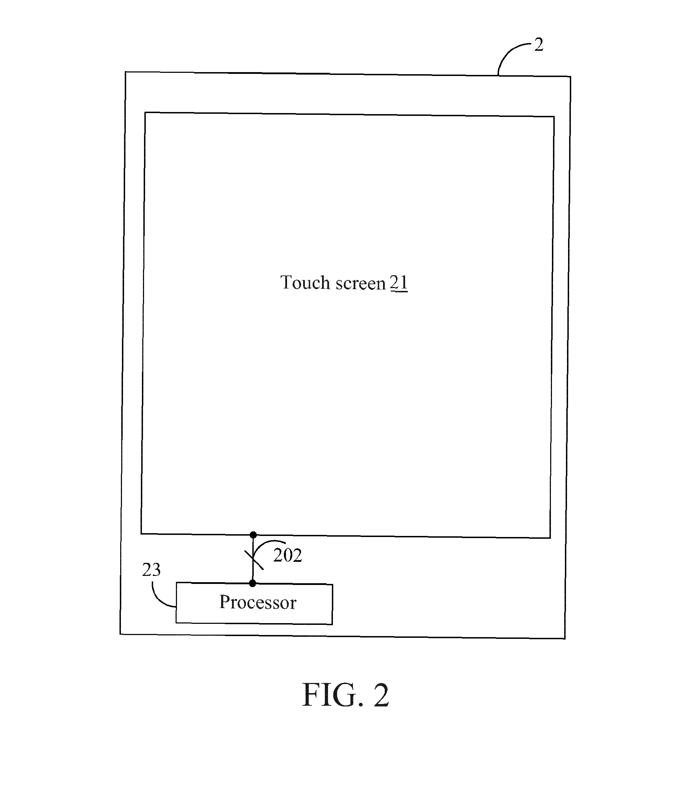

A first embodiment of the present invention is as shown in **FIG. 2****,** which depicts a handheld device **2.** The handheld device **2** may be a smartphone, a digital personal assistant (PDA), a tablet computer, personal computers (PC), laptop PC, a satellite positioning & navigation device or some other portable device. The handheld device **2** comprises a touch screen **21** and a processor **23.** The processor **23** is electrically connected to the touch screen **21.** It shall be noted that, other elements of the handheld device **2,** e.g., a communication module, a display driving module, a power module and other elements less related to the present invention, are all omitted from the drawings for the sake of simplicity.

The touch screen **21** may be any of various types of touch screens, e.g., a capacitive touch screen, a resistive touch screen, an electromagnetic touch screen or an ultrasonic wave touch screen. The touch screen **21** may sense a touch generated by a user with his or her finger or with a touch pen, and generate a touch signal **202** accordingly. Specifically, when a finger of the user touches or slides on the touch screen **21,** this operation can be sensed by the touch screen **21** to generate a touch signal **202.**

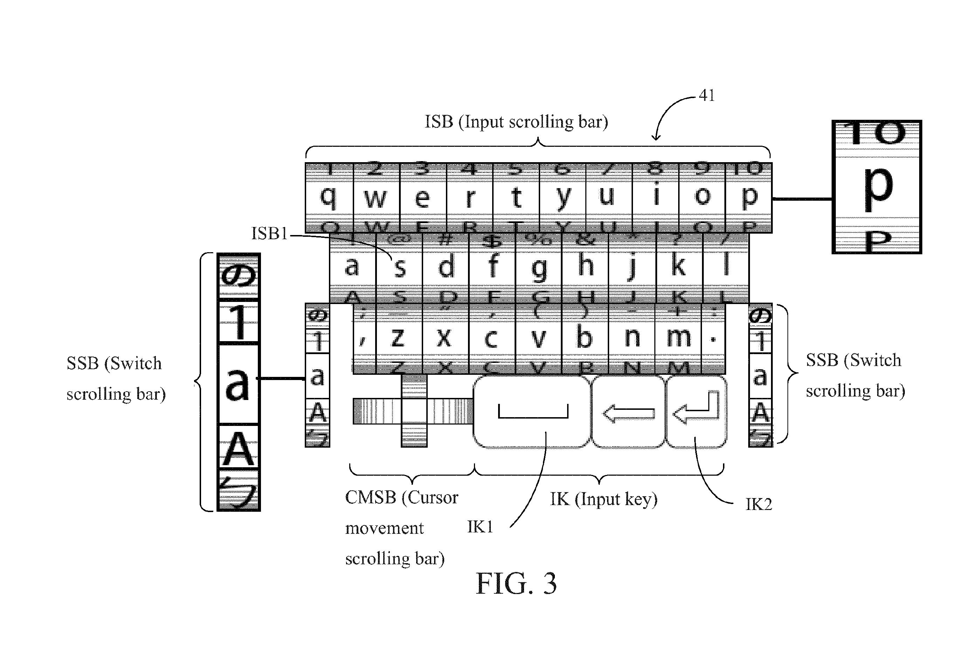

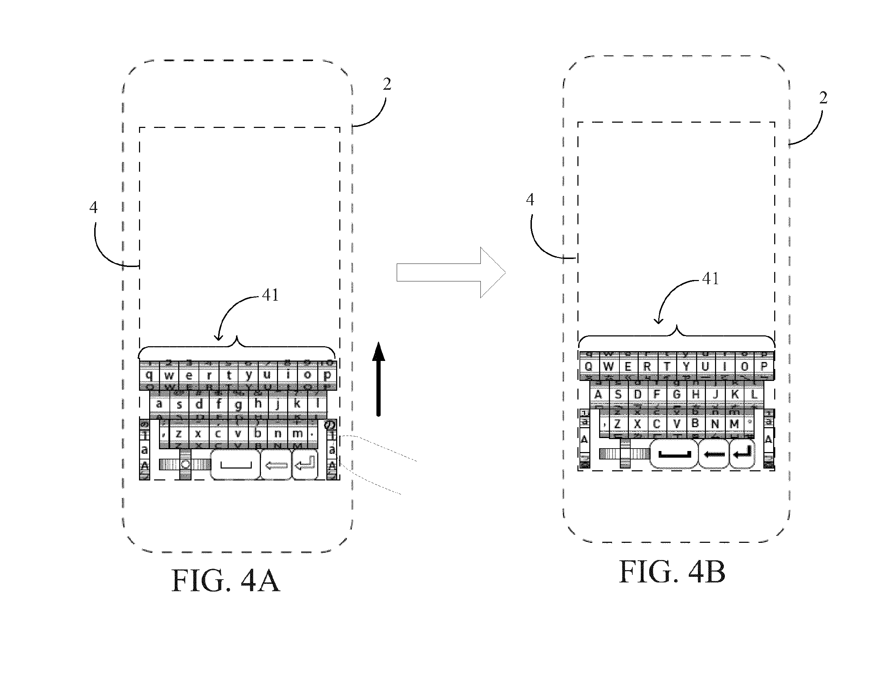

In addition, a user interface **4** is displayed by the touch screen **21,** as shown in **FIG.** 3 and **FIGs. 4A****∼4B.** The user interface **4** comprises an input zone **41,** which defines a plurality of input scrolling bars **ISB** and at least one switch scrolling bar **SSB.** Each of the input scrolling bars **ISB** has a primary character-symbol and at least one secondary character-symbol, and is presented in the form of a scrolling bar. For example, as shown in **FIG.** 3, at present the primary character-symbol of each of the input scrolling bars is an English lower-case character and the secondary character-symbols of each of the input scrolling bars are an English capital character, a digital symbol and a punctuation symbol.

The processor **23** receives the touch signal **202** from the touch screen **21,** determines that this touch is a sliding action and determines whether the touch signal **202** corresponds to one of the input scrolling bars **ISB** or to the switch scrolling bars **SSB** of the input zone **41.** If the touch signal **202** corresponds to a target input scrolling bar (e.g., **ISB1)** among the input scrolling bars **ISB** of the input zone **41,** the processor **23** changes the primary character-symbol presented by the target input scrolling bar **ISB1** into another primary character-symbol and changes the at least one secondary character-symbol into another at least one secondary character-symbol according to a first sliding direction corresponding to the sliding action so as to generate an input signal corresponding to the another primary character-symbol and then input a symbol or a character of the another primary character-symbol into the user interface **4.**

The processor **23** further changes the another primary character-symbol presented by the target input scrolling bar **ISB1** back into the original primary character-symbol and changes the another at least one secondary character-symbol presented by the target input scrolling bar **ISB1** back into the original at least one secondary character-symbol after the input signal **202** is generated. Conceivably, when the target input scrolling bar **ISB1** is slid by the user to the another primary character-symbol, the another primary character-symbol corresponds to one of the original at least one secondary character-symbol, and one of the another at least one secondary character-symbol corresponds to the original primary character-symbol.

More specifically, the aforesaid "another primary character-symbol" corresponds to one of the "original at least one secondary character-symbol" presented when the target input scrolling bar **ISB1** hasn't been scrolled. Likewise, one of the aforesaid "another at least one secondary character-symbol" corresponds to the "original primary character-symbol" presented when the target input scrolling bar **ISB1** hasn't been scrolled.

An example will be illustrated with reference to **FIG.** 3. When the target input scrolling bar **ISB1** is slid downwards by the user, the primary character-symbol is changed from "s" into another primary character-symbol "@", and the two secondary character-symbols are changed from "@" and "S" into "S" and "s". Then, the processor **23** further generates an input signal (not depicted) corresponding to the changed primary character-symbol "@", and after the changed primary character-symbol "@" is input and displayed on the touch screen **21,** changes the primary character-symbol of the target input scrolling bar **ISB1** from "@" back into "s" and changes the two secondary character-symbols from "S" and "s" back into "@" and "S".

Furthermore, please refer to **FIG. 3** and **FIGs. 4A****∼4B.** When the touch signal **202** corresponds to one of the switch scrolling bars **SSB** of the input zone **41,** the processor **23** changes a representative primary character-symbol and at least one representative secondary character-symbol presented by this switch scrolling bar **SSB** and simultaneously changes the primary character-symbol and the at least one secondary character-symbol presented by each of the input scrolling bars **ISB** according to a second sliding direction corresponding to the sliding action. An example will be illustrated with reference to **FIG. 3** and **FIGs. 4A****∼4B.** When the switch scrolling bar **SSB** is slid upwards by the user to change the representative primary character-symbol thereof from "a" into "A", the primary character-symbol presented by each of the input scrolling bars **ISB** is simultaneously changed from an "English lower-case character" into an "English capital character" and the secondary character-symbols are simultaneously changed from a "digital-and- punctuation symbol" and an "English capital character" into an "English lower-case character" and a "Chinese phonetic symbol".

It should be appreciated that, the terms "first" and "second" in the "first" sliding direction and the "second" sliding direction described above are only for convenience of description, and do not mean any difference in time or in direction. In other words, the "first" sliding direction and the "second" sliding direction may respectively be sliding upwards or sliding downwards, and the two sliding directions may be either the same or different.

In detail, the primary character-symbol and the at least one secondary character-symbol of each of the input scrolling bars **ISB** of the input zone **41** may be one of a language input character-symbol, a digital symbol, a punctuation symbol, and a facial expression symbol respectively. For example, the language input character-symbol may be one of an English lower-case character, an English capital character, a Chinese phonetic symbol, and a Japanese phonetic alphabet symbol. In this embodiment, as shown in **FIG.** 3 and **FIGs. 4A****∼4B,** a combination of an "English lower-case character", an "English capital character", a "digital-and-punctuation symbol" and a "Chinese phonetic symbol" is illustrated as an example of each of the input scrolling bars **ISB** of the input zone **41.** However, in other embodiments, each of the input scrolling bars **ISB** of the input zone **41** may present a combination of other kinds of character-symbols (e.g., a combination of an "English lower-case character", an "English capital character", a "Chinese phonetic symbol", a "Japanese phonetic alphabet symbol", a "facial expression symbol" and a "digital-and-punctuation symbol" etc.). These varied combinations can be appreciated by people of ordinary skill in the art according to the descriptions of this embodiment and, thus, will not be further described herein.

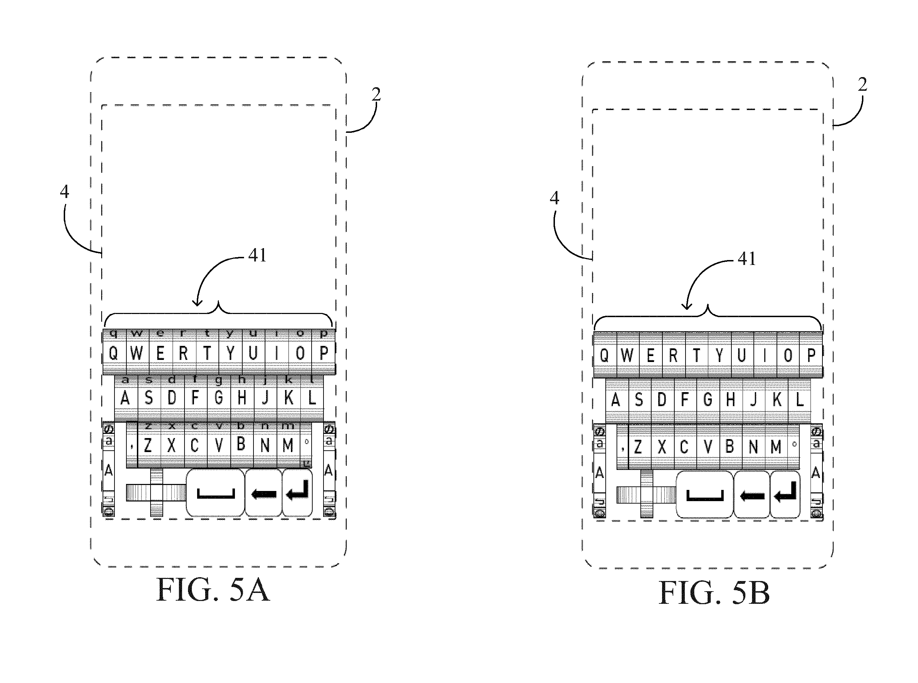

It should be appreciated that, in this embodiment, there are two switch scrolling bars **SSB,** which are disposed at the lower left side and the lower right side of the input zone **41** respectively; however, the input zone **41** in other embodiments may comprise only a single switch scrolling bar **SSB,** which is disposed at the lower left side or the lower right side of the input zone **41.** In addition, for purpose of simplicity, only two secondary character-symbols are displayed by each of the input scrolling bars in this embodiment; however, more than two secondary character-symbols may be displayed by each of the input scrolling bars in other embodiments,. In another embodiment, each of the input scrolling bars may only display one secondary character-symbol (as shown in **FIG.** 5A). Furthermore, in a further embodiment, no secondary character-symbol is displayed by each of the input scrolling bars before the input zone **41** is touched by the user (as shown in **FIG. 5B****),** and the secondary character-symbols are displayed only when the input zone **41** is touched by the user.

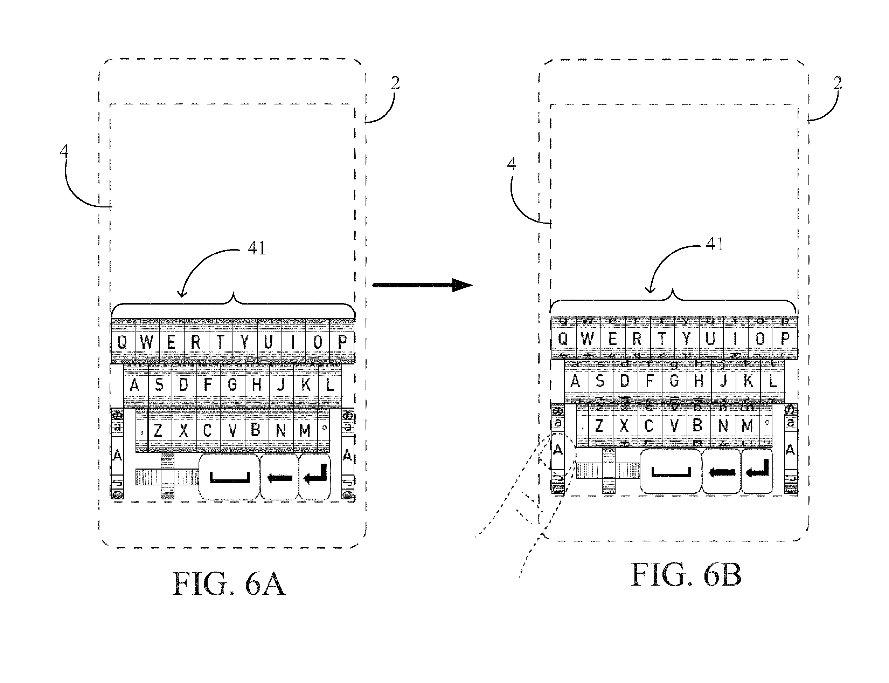

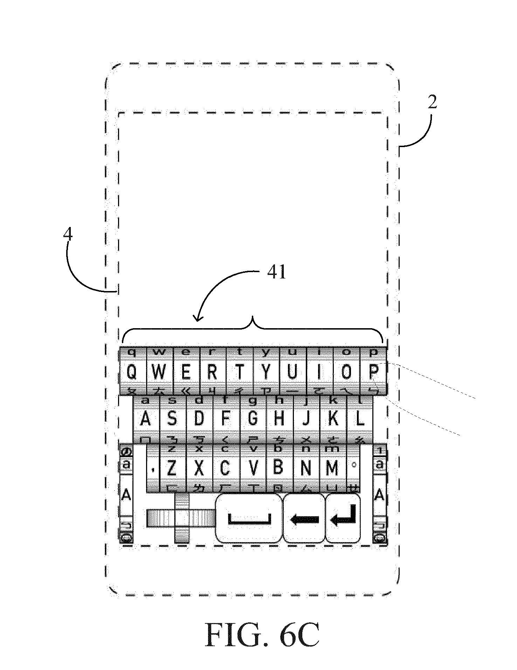

For example, please refer to **FIGs. 6A****∼6C**. Only the primary character-symbol is displayed by each of the input scrolling bars **ISB** when the switch scrolling bars **SSB** are not touched by the user (as shown in **FIG. 6**); however, the secondary character-symbols of each of the input scrolling bars are displayed in the input zone **41** as soon as one of the switch scrolling bars **SSB** is touched by the user (as shown in **FIG. 6B****),** or the secondary character-symbols of each of the input scrolling bars are displayed in the input zone **41** as soon as one of the input scrolling bars **ISB** is touched by the user (as shown in **FIG. 6C****)** to allow the user to scroll the input scrolling bars according to the displayed secondary character-symbols.

It can be appreciated by people of ordinary skill in the art from this embodiment that: depending on different designs, implementations where there is a single switch scrolling bar **SSB** and each of the input scrolling bars **ISB** may display more than two secondary character-symbols/one character-symbol/no character-symbol are possible. These implementations have functions and operations identical to those described above and differ only in the number of the switch scrolling bars **SSB** and in display timings of the secondary character-symbols, so these implementations will not be further described herein.

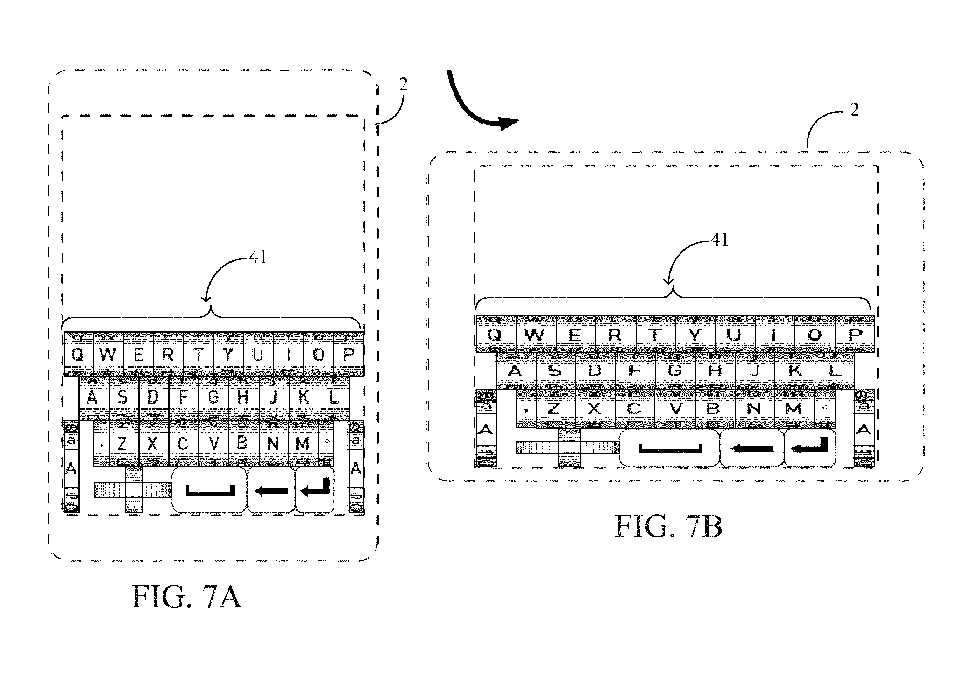

Additionally, please refer to **FIG. 7A** and **FIG. 7B****.** The input zone **41** can be presented always in an upright manner regardless of how the handheld device **2** is held by the user. As shown in **FIG. 7A** and **FIG. 7B****,** no matter whether the handheld device **2** is held upright or laterally by the user, the input zone **41** can be adjusted by the processor **23** to be presented always upright on the touch screen **21** in response to changes sensed by a movement sensing device (e.g., a gravity sensor or a gyro) in the handheld device **2.**

Please also refer to **FIG. 3** for a second embodiment. This embodiment is an embodiment extended from the first embodiment, so this embodiment can also execute all the operations described in the first embodiment and have all the corresponding functions. Therefore, only differences from the first embodiment will be described herebelow.

As shown in **FIG.** 3, **FIGs. 4A****∼4B,** **FIGs. 5A****∼5B** and **FIGs. 6A****∼6C,** the input zone **41** of this embodiment further comprises at least one input key **IK** and at least one cursor movement scrolling bar **CMSB.** The user can use the input key **IK** to accomplish line feed or format editing. For example, the user may press a blank input key **IK1** and then input the text; or the user may press a line feed input key **IK2** and then input the text. The cursor movement scrolling bar **CMSB** is used to allow the user to change the location of the input cursor on the user interface **4** according to a direction (a left, right, upward or downward direction) of sliding the cursor movement scrolling bar **CMSB.** It shall be appreciated that, the at least one input key **IK** and the at least one cursor movement scrolling bar **CMSB** are provided only as an optional design of the present invention, and modifications (e.g., adding or removing the at least one input key **IK** and/or the at least one cursor movement scrolling bar **CMSB)** can be readily made by any people skilled in the art based on the aforesaid embodiment, so the input keys **IK** and the cursor movement scrolling bars **CMSB** depicted in the drawings are not intended to limit the scope of the present invention.

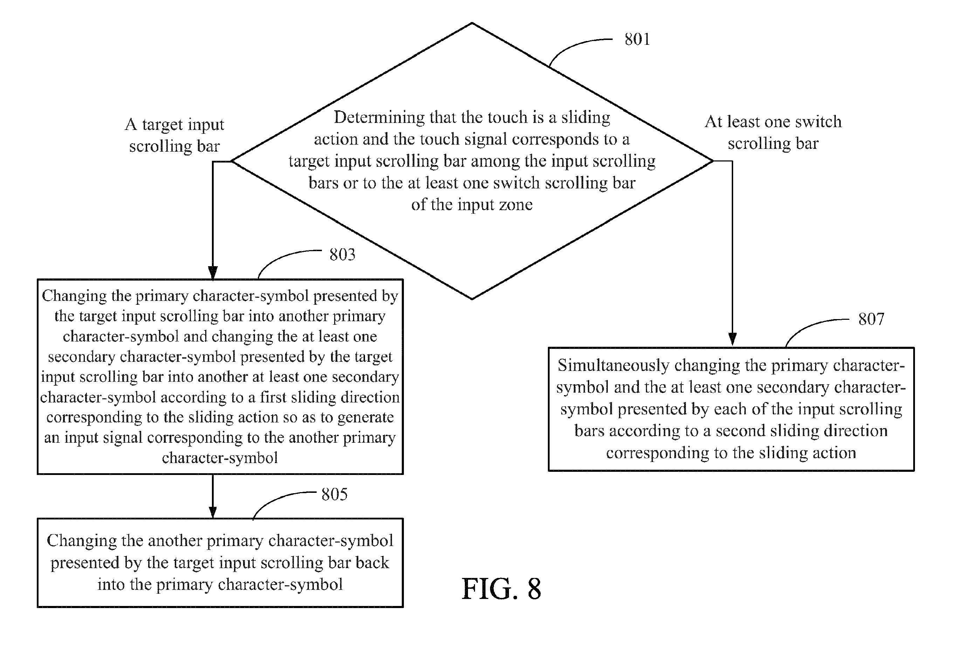

A third embodiment of the present invention is an input method, a flowchart diagram of which is shown in **FIG. 8****.** This input method is used for the handheld device **2** described in the first embodiment and the second embodiment. The handheld device comprises a touch screen and a processor. The touch screen senses a touch to generate a touch signal, and displays a user interface. The user interface comprises an input zone. The input zone defines a plurality of input scrolling bars and at least one switch scrolling bar. Each of the input scrolling bars has a primary character-symbol and at least one secondary character-symbol and is presented in the form of scrolling bar. This input method is executed by the processor.

Firstly, step **801** is executed to enable the processor to determine that the touch is a sliding action and the touch signal corresponds to a target input scrolling bar among the input scrolling bars or to the at least one switch scrolling bar of the input zone. Then, when the touch signal corresponds to the target input scrolling bar among the input scrolling bars of the input zone, step **803** is executed to change the primary character-symbol presented by the target input scrolling bar into another primary character-symbol and change the at least one secondary character-symbol presented by the target input scrolling bar into another at least one secondary character-symbol according to a first sliding direction corresponding to the sliding action so as to generate an input signal corresponding to the another primary character- symbol.

Then, step **805** is executed to enable the processor to further change the another primary character-symbol presented by the target input scrolling bar back into the primary character-symbol. Moreover, if the target input scrolling bar is designed to present secondary character-symbols, then the another at least one secondary character-symbol presented by the target input scrolling bar is also changed back into the at least one secondary character-symbol. As described previously, when the target input scrolling bar **ISB1** is slid to the another primary character-symbol, the another primary character-symbol corresponds to one of the at least one secondary character-symbol, and one of the another at least one secondary character-symbol corresponds to the primary character-symbol.

In addition, when the touch signal corresponds to the at least one switch scrolling bar of the input zone, step **807** is executed to simultaneously change the primary character-symbol and the at least one secondary character-symbol of each of the input scrolling bars according to a second sliding direction corresponding to the sliding action.

It should be appreciated that, the terms "first" and "second" in the "first" sliding direction and the "second" sliding direction described above are only for convenience of description, and do not mean any difference in time or in direction. In other words, the "first" sliding direction and the "second" sliding direction may respectively be sliding upwards or sliding downwards, and the two sliding directions may be either the same or different. Accordingly, the step **803** and the step **807** may change the primary character-symbol and the at least one secondary character-symbol presented by the target input scrolling bar or presented by each of the input scrolling bars according to the sliding direction from the user so as to allow the user to further input a character or a symbol.

In addition to the aforesaid steps, the input method of this embodiment can also execute all the operations and have all the functions set forth in the first embodiment and the second embodiment. How the input method of this embodiment executes these operations and have these functions will be readily appreciated by those of ordinary skill in the art based on the explanation of the first embodiment and the second embodiment, and thus will not be further described herein.

According to the above descriptions, through sliding the input scrolling bars or the switch scrolling bars on the user interface by the user, the handheld device and the input method thereof of the present invention change the primary character-symbol and the at least one secondary character-symbol of a target input scrolling bar among the input scrolling bars and then input a character or a symbol; or simultaneously change the primary character-symbol and the at least one secondary character-symbol of each of the input scrolling bars, respectively. This allows the user to switch between text symbols or/and facial expression symbols according to contents to be edited. Accordingly, as compared to conventional handheld devices and input methods thereof, the present invention allows the user to switch between character-symbols presented by the input scrolling bars more conveniently and directly so as to effectively edit the contents to be input.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A handheld device, comprising:
a touch screen, being configured to sense a touch to generate a touch signal, and display a user interface, wherein the user interface comprises an input zone, the input zone defines a plurality of input scrolling bars and at least one switch scrolling bar, and each of the input scrolling bars has a primary character-symbol and at least one secondary character-symbol; and
a processor electrically connected to the touch screen, being configured to determine that the touch is a sliding action and the touch signal corresponds to a target input scrolling bar among the input scrolling bars or to the at least one switch scrolling bar of the input zone, wherein when the touch signal corresponds to the target input scrolling bar, the processor changes the primary character-symbol of the target input scrolling bar into another primary character-symbol and changes the at least one secondary character-symbol of the target input scrolling bar into another at least one secondary character-symbol according to a first sliding direction corresponding to the sliding action so as to generate an input signal corresponding to the another primary character-symbol, the processor is further configured to change the another primary character-symbol presented by the target input scrolling bar back into the primary character-symbol after the input signal is generated, the another primary character-symbol corresponds to one of the at least one secondary character-symbol, one of the another at least one secondary character-symbol corresponds to the primary character-symbol, and when the touch signal corresponds to the at least one switch scrolling bar of the input zone, the processor simultaneously changes the primary character-symbol and the at least one secondary character-symbol of each of the input scrolling bars according to a second sliding direction corresponding to the sliding action.

2. The handheld device of claim 1, wherein the primary character-symbol and the at least one secondary character-symbol presented by each of the input scrolling bars is one of a language input character-symbol, a digital symbol, a punctuation symbol, and a facial expression symbol respectively.

3. The handheld device of claim 2, wherein the language input character-symbol is one of an English lower-case character, an English capital character, a Chinese phonetic symbol, and a Japanese phonetic alphabet symbol.

4. The handheld device of any of claims 1 to 3, wherein the input zone further comprises at least one input key and at least one cursor movement scrolling bar.

5. An input method for use in a handheld device, the handheld device comprising a touch screen and a processor, the touch screen being configured to sense a touch to generate a touch signal and display a user interface, the user interface comprising an input zone, the input zone defining a plurality of input scrolling bars and at least one switch scrolling bar, and each of the input scrolling bars having a primary character-symbol and at least one secondary character-symbol, the input method being executed by the processor and comprising the following steps of:
(a) determining that the touch is a sliding action and the touch signal corresponds to a target input scrolling bar among the input scrolling bars or to the at least one switch scrolling bar of the input zone;
(b) when the touch signal corresponds to the target input scrolling bar among the input scrolling bars of the input zone, changing the primary character-symbol of the target input scrolling bar into another primary character-symbol and changing the at least one secondary character-symbol of the target input scrolling bar into another at least one secondary character-symbol according to a first sliding direction corresponding to the sliding action so as to generate an input signal corresponding to the another primary character-symbol, and changing the another primary character-symbol presented by the target input scrolling bar back into the primary character-symbol after the input signal is generated, wherein the another primary character-symbol corresponds to one of the at least one secondary character-symbol, one of the another at least one secondary character-symbol corresponds to the primary character-symbol; and
(c) when the touch signal corresponds to the at least one switch scrolling bar of the input zone, simultaneously changing the primary character-symbol and the at least one secondary character-symbol of each of the input scrolling bars according to a second sliding direction corresponding to the sliding action.

6. The input method of claim 5, wherein the primary character-symbol and the at least one secondary character-symbol presented by each of the input scrolling bars is one of a language input character-symbol, a digital symbol, a punctuation symbol, and a facial expression symbol respectively.

7. The input method of claim 6, wherein the language input character-symbol is one of an English lower-case character, an English capital character, a Chinese phonetic symbol, and a Japanese phonetic alphabet symbol.

8. The input method of any of claims 5 to 7, wherein the input zone further comprises at least one input key and at least one cursor movement scrolling bar.
